# DEMANDE DE BREVET EUROPEEN

(11) **EP 2 224 566 A1**
(43) Date de publication de la demande: **01.09.2010**
(21) Numéro de dépôt: 10153852.8
(22) Date de dépôt: 17.02.2010
(51) Int. Cl.: H02G 3/20, H02G 3/38, H02G 3/12

(54) **Boîtier de descente de câbles électriques destiné à être intégré à une dalle en béton en étant situé au-dessus d'une cloison**

(30) Priorité: 27.02.2009 FR 0900890
(71) Demandeur: KP1, 84000 Avignon (FR)
(72) Inventeur: Garcia, Richard, 30650, ROCHEFORT DU GARD (FR)
(74) Mandataire: Robert, Jean-Pierre

(57) **Abrégé**

L'invention concerne un boîtier de descente de câbles électriques (1), destiné à être intégré à un élément de bâtiment en béton tel qu'une prédalle, en étant implanté avant coulage du béton, ce boîtier comportant une paroi inférieure (7) et une paroi supérieure (6) prévues pour être traversées par un câble électrique gainé.

Selon l'invention, le boîtier comporte des organes d'accrochage (9, 11) opposés, chaque organe d'accrochage (9, 11) constituant un oeillet ou passant agencé pour recevoir un ruban cranté (16, 17) et pour bloquer ce ruban cranté (16, 17).

L'invention s'applique au domaine de la construction de bâtiments.

## Description

L'invention concerne un boîtier dit de descente électrique utilisé dans le domaine de la construction de bâtiment pour faciliter la descente d'un câble électrique intégré à une dalle, dans ou le long d'une paroi située sous cette dalle.

### ARRIERE PLAN DE L'INVENTION

Un tel boîtier est typiquement intégré à un élément de bâtiment en béton tel qu'une prédalle, en étant implanté avant coulage du béton constituant cette prédalle.

L'implantation d'un tel boîtier est assurée en le plaçant entre des câbles de précontrainte que comporte la prédalle, à un emplacement situé à l'aplomb d'une cloison devant être construite ultérieurement sous cette prédalle.

Plusieurs boîtiers sont ainsi fixés au fond du coffrage dans lequel est réalisée la prédalle, par exemple au moyen de clous, chaque boîtier ayant sa paroi inférieure en appui sur ce fond.

Le béton de la prédalle est ensuite coulé, de telle manière que la paroi supérieure de chaque boîtier reste affleurante par rapport à la surface supérieure du béton constituant la prédalle. La paroi inférieure de chaque boîtier reste elle aussi accessible via la face inférieure de la prédalle, une fois que le béton qui la constitue a été coulé.

La prédalle est ensuite installée sur chantier, après quoi un électricien vient implanter des câbles électriques gainés traversant chaque boîtier de descente. Chaque câble gainé est d'abord engagé à travers la paroi supérieure du boîtier.

L'électricien ouvre ensuite la paroi inférieure du boîtier pour tirer le câble gainé en question vers l'étage inférieur, en vue de l'intégrer à la cloison devant être construite à l'aplomb du boîtier.

A ce stade, les boîtiers électriques sont reliés les uns aux autres par des câbles électriques gainés reposant sur la prédalle, l'ensemble de ces câbles étant ensuite noyé dans le béton de la dalle de compression coulée sur la prédalle.

L'implantation d'un tel boîtier de descente doit ainsi être réalisée de manière suffisamment précise pour qu'il soit situé au droit d'une cloison non encore construite, et assurer un maintien suffisamment ferme pour que le boîtier ne se déplace pas lors du coulage du béton.

En pratique, l'implantation implique soit d'utiliser des clous lorsque le matériau du fond du coffrage le permet, soit de fixer le boîtier au treillis constitué par les câbles de précontrainte, en improvisant des moyens de maintien qui sont le plus souvent insuffisants.

### OBJET DE L'INVENTION

Le but de l'invention est de proposer une solution pour faciliter l'implantation précise d'un tel boîtier de descente.

### RESUME DE L'INVENTION

A cet effet, l'invention a pour objet un boîtier de descente de câbles électriques, destiné à être intégré à un élément de bâtiment en béton tel qu'une prédalle en étant implanté avant coulage du béton, ce boîtier comportant une paroi inférieure et une paroi supérieure destinées à être traversées par un câble électrique gainé après coulage du béton constituant l'élément auquel il est intégré, **caractérisé en ce qu**'il comporte des organes d'accrochage opposés, chaque organe d'accrochage constituant un oeillet ou passant agencé pour recevoir un ruban cranté et pour bloquer ce ruban cranté.

Avec cette solution, le boîtier peut être implanté de façon précise tout en étant maintenu fermement, sans devoir utiliser des clous ou des vis, tout en ajustant sa position grâce aux rubans crantés.

L'invention concerne également un boîtier tel que défini ci-dessus, comportant deux organes d'accrochage situés au niveau d'une arête supérieure de ce boîtier et dépassant latéralement par rapport à cette arête supérieure.

Une fois que le boîtier est implanté, bien que les rubans crantés soient engagés dans les organes d'attache, ils laissent la face supérieure du boîtier dégagée pour faciliter la traversée de câbles électriques gainés à travers cette face supérieure.

L'invention concerne également un boîtier tel que défini ci-dessus, constitué d'un corps et d'un couvercle fermant ce corps, et dans lequel les organes d'accrochage sont portés par le couvercle.

L'invention concerne également un boîtier tel que défini ci-dessus, comportant une paroi latérale pourvue d'au moins deux encoches s'étendant perpendiculairement au fond, ces deux encoches étant formées dans deux face opposées de cette paroi latérale, en étant prévues pour recevoir un câble de précontrainte chevauché par le boîtier, le fond comportant une ligne d'affaiblissement reliant ces deux encoches l'une à l'autre.

Le boîtier peut ainsi être implanté en chevauchant un ou des câbles de précontrainte, de sorte qu'il n'est pas nécessaire de sectionner de tels câbles pour l'implantation.

L'invention concerne également un boîtier tel que défini ci-dessus, comportant un fond dont au moins une partie présente une structure de type grillagée ou croisillonnée.

La structure grillagée du fond lui permet de recevoir une couche de plâtre, afin de rendre la face inférieure du boîtier à peu près invisible après application de cette couche de plâtre.

L'invention concerne également un boîtier tel que défini ci-dessus, constitué de deux parties identiques portant chacune au moins un anneaux et au moins un ergot complémentaires, ces deux parties s'emboîtant l'une dans l'autre par encliquetage d'au moins un ergot porté par l'une des parties dans au moins un anneau porté par l'autre partie et réciproquement.

L'invention concerne également un boîtier tel que défini ci-dessus, comportant un fond et une paroi supérieure, le fond étant constitué de deux demi-fonds faisant chacun partie de l'une des deux parties constitutives du boîtier, et la paroi supérieure étant elle aussi constituée de deux demi-parois supérieures faisant chacune partie de l'une des parties constituant ce boîtier.

### BREVE DESCRIPTION DES FIGURES

- La figure 1 est une vue en perspective du boîtier selon l'invention représenté seul ;
- La figure 2 est une vue en perspective du boîtier selon l'invention lors de son implantation dans une prédalle avant coulage du béton constitutif de cette prédalle ;
- La figure 3 est une vue en perspective montrant la paroi inférieure du boîtier selon l'invention ;
- La figure 4 est une vue en perspective d'une moitié du boîtier selon l'invention représentée seule ;
- La figure 5 est une vue en perspective d'une variante du boîtier selon l'invention.

### DESCRIPTION DETAILLEE DE L'INVENTION

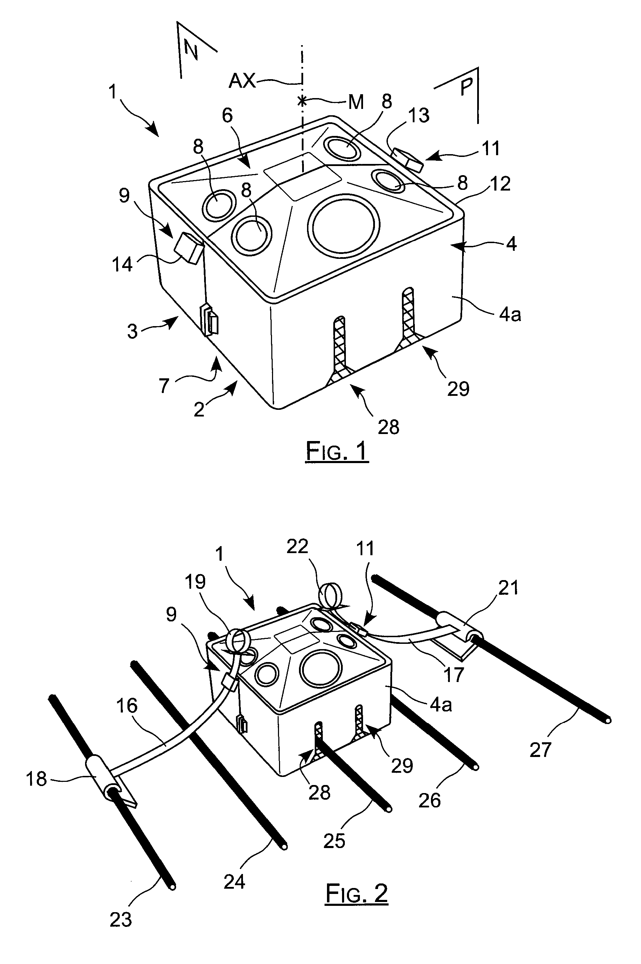

Le boîtier selon l'invention qui est visible sur la figure 1 en y étant repéré par 1 a une forme généralement parallélépipédique généralement symétrique par rapport à un axe vertical central repéré par AX, et il est constitué de deux parties 2 et 3 identiques qui sont fixées l'une à l'autre en étant situées de part et d'autre d'un plan P passant par l'axe de symétrie AX.

Ce boîtier 1 comporte une paroi latérale 4 en forme de tube à section carrée, dont l'extrémité supérieure est fermée par une paroi supérieure 6 à contour carré et de forme légèrement bombée, et dont l'extrémité inférieure est fermée par un fond 7 délimitant une face inférieure plane.

La paroi supérieure 6 comporte quatre prédécoupes circulaires repérées par 8 et permettant chacune de constituer une ouverture, des extrémités de câbles électriques gainés non représentés pouvant ainsi être introduites par ces ouvertures dans le boîtier 1.

Comme visible dans les figures 1 et 2, ce boîtier est équipé de deux organes d'accrochage repérés par 9 et 11 qui dépassent latéralement, c'est-à-dire radialement, de la paroi latérale 4 à hauteur de l'extrémité supérieure. Ces deux organes d'accrochage sont diamétralement opposés par rapport à l'axe AX.

Chaque organe d'accrochage 9, 11 est porté par une portion supérieure de la paroi latérale 4 en étant situé d'une part à hauteur de la paroi supérieure, et d'autre part en étant espacé radialement d'une arête circulaire 12 correspondant à la jonction de la paroi latérale 4 et de la paroi supérieure 6.

Ces organes d'accrochage 9, 11 constituent des oeillets ou passants dans lesquels s'engagent deux rubans crantés représentés en figure 2. A cet effet, chaque organe d'accrochage 9, 11 comprend une ouverture 13, 14 à section rectangulaire délimitant un canal. Ces deux canaux ou ouvertures 13, 14 sont orientés vers un même point M qui est porté par l'axe AX en étant situé hors du boîtier au delà de la paroi supérieure 6.

Concrètement, chaque canal 13, 14 est orienté selon un axe fictif situé hors du boîtier en étant espacé d'environ quarante-cinq degrés de la face supérieure du boîtier et de quarante-cinq degrés environ de la paroi latérale du boîtier.

Ainsi, les rubans crantés qui sont repérés par 16 et 17 s'engagent dans chaque organe d'accrochage en étant espacés de quarante-cinq degrés, par rapport à la paroi latérale et par rapport à la paroi supérieure 6.

Comme visible dans la figure 2, le ruban cranté 16 comprend une extrémité repérée par 18 en forme de palette destinée à s'accrocher sur un câble de précontrainte, et une autre extrémité 19 en forme de boucle permettant sa préhension par un opérateur serrant ce ruban 16.

La palette 18 a une forme correspondant à celle d'une plaque qui est repliée pour présenter en section une forme correspondant à celle de la lettre J, constituant ainsi un crochet capable de s'engager sur un câble de précontrainte en le chevauchant. L'extrémité en elle-même du ruban 16 est solidarisée à l'extrémité de la portion recourbée de la palette 18.

Dans l'exemple illustré sur les figures, la boucle 19 ainsi que la palette 18 et le corps de ruban 16 forment un tout, c'est-à-dire une pièce unique pouvant être fabriquée par moulage par injection d'une matière plastique ou polyamide. Mais cet ensemble peut aussi être fabriqué à partir d'un corps de ruban, d'une palette et d'une boucle qui sont solidarisés les uns aux autres de manière amovible ou inamovible, par exemple au moyen de rivets ou autres.

Le ruban cranté 17 qui est identique au ruban 16 comporte lui aussi une extrémité d'accrochage en forme de palette repérée par 21, ainsi qu'une extrémité de préhension en forme de boucle qui est repérée par 22.

Dans la figure 2, le boîtier est implanté dans une prédalle dont on a représenté en partie les câbles de précontrainte qui sont repérés par 23 à 27. L'implantation du boîtier consiste à le placer entre deux câbles consécutifs, ici les câbles 24 et 25, le fond 7 de ce boîtier 1 étant appui sur le fond de coffrage, puis à placer la palette 18 du premier ruban 16 sur un câble de précontrainte suffisamment éloigné du boîtier, ici le câble 23, et à placer la palette 21 du ruban 17 sur un autre câble de précontrainte suffisamment éloigné, ici le câble 27.

L'opérateur saisit ensuite la boucle 19 du ruban 16 préalablement engagé dans l'organe d'accrochage 9 et tire sur cette boucle tout en maintenant le boîtier en place, pour tendre ce ruban 16. L'opérateur saisit ensuite la boucle 22 du ruban 17 préalablement engagé dans l'organe d'accrochage 11 et tire sur cette autre boucle 22 en maintenant le boîtier en place, de manière à tendre cet autre ruban cranté 17.

Dans cette situation, le boîtier est maintenu en position latéralement par les deux rubans tendus, et son fond plan est en appui sur le fond du coffrage. Grâce à la mise en oeuvre des rubans 16 et 17, une longueur relativement importante sépare chaque palette 18, 21 du boîtier 1, de sorte que ces rubans s'étendent selon une direction très proche de l'horizontale pour que leur serrage n'ait pas d'incidence sur la hauteur des câbles 23 et 27 auxquels leurs extrémités sont accrochées.

Afin de faciliter son implantation, la paroi latérale 4 du boîtier est pourvue d'au moins deux encoches verticales situées à des faces opposées de cette paroi latérale 4 et d'une ligne d'affaiblissement réalisée au niveau du fond 7 du boîtier et reliant deux encoches latérales opposées. Ces encoches ainsi que la ligne d'affaiblissement permettent d'engager le boîtier 1 sur un câble de précontrainte, tel que le câble 25, afin qu'il le chevauche tout en ayant son fond 7 en appui sur le fond du coffrage.

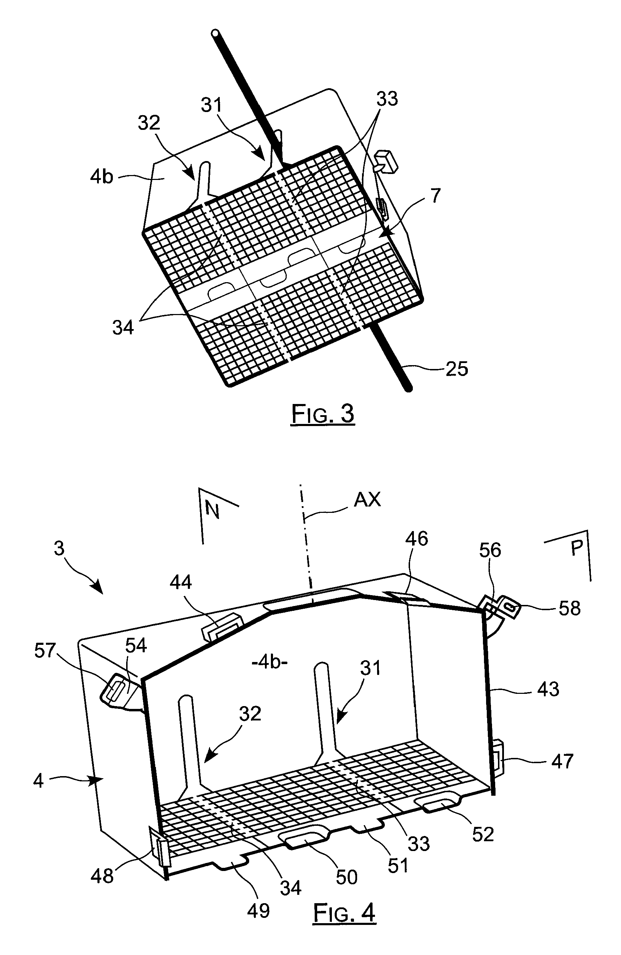

Dans l'exemple des figures, le boîtier comporte deux encoches 28 et 29 à la face 4a de la paroi latérale 4, et deux autres encoches 31 et 32 visibles sur les figures 3 et 4 qui sont réalisées à la face 4b opposée à la face 4a par rapport à un plan de symétrie P du boîtier.

Chaque encoche part d'une région correspondant à la jonction entre la face latérale dans laquelle elle est réalisée et le fond du boîtier, pour s'étendre sensiblement jusqu'à la moitié de la hauteur de cette face.

Complémentairement, la paroi inférieure ou fond 7 du boîtier comporte deux lignes d'affaiblissement rectilignes, repérées par 33 et 34, qui joignent chacune deux encoches réalisées à des faces opposées de la paroi latérale 4. Les extrémités de la ligne d'affaiblissement 33 débouchent ainsi dans les encoches 28 et 31, et les extrémités de la ligne 34 débouchent dans les encoches 29 et 32.

Le boîtier peut ainsi être implanté à cheval sur des câbles de précontrainte sans devoir les sectionner, comme illustré sur la figure 2. L'implantation consiste alors à placer le boîtier sur un ou des câbles de telle manière que chaque ligne d'affaiblissement soit en appui sur toute sa longueur sur un câble, puis à enfoncer le boîtier vers le fond du coffrage.

La pression exercée pour enfoncer le boîtier rompt alors le fond 7 de ce boîtier le long de chaque ligne d'affaiblissement, de sorte que chaque câble s'engage dans les deux encoches qui sont prévues à cet effet aux faces opposées de la paroi 4.

Comme visible dans les figures 3 et 4, la paroi inférieure ou fond 7 du boîtier selon l'invention a, outre ses lignes d'affaiblissement 33 et 34, une structure du type grillagée ou croisillonnée. Cette structure grillagée permet d'enduire de plâtre ou de joint la face inférieure de la boîte de descente afin de la rendre invisible, par exemple une fois que la cloison a été construite.

Avantageusement, la face inférieure grillagée est située légèrement en retrait par rapport au bord inférieur de la paroi latérale 4. Grâce à ce retrait, la face inférieure du fond 7 peut porter une couche de plâtre qui a une épaisseur correspondant au retrait R, et qui adhère correctement à cette face inférieure grâce aux croisillons dans lesquels le plâtre s'incruste lorsqu'il est appliqué.

Par ailleurs, la structure grillagée permet à l'opérateur de facilement couper une portion du fond 7 pour accéder à l'extrémité de câble qui a été engagée par la paroi supérieure, afin de le tirer, avant d'enduire de plâtre la partie restante de ce fond.

Dans l'exemple des figures 1 à 4, le boîtier selon l'invention est constitué de deux parties ou moitiés qui sont identiques, qui sont fixées l'une à l'autre par encliquetage en étant situées de part et d'autre d'un plan P passant par l'axe AX de symétrie du boîtier 1.

Chaque partie qui est une pièce en matière plastique de relativement faible épaisseur comporte ainsi un bord s'étendant selon un contour fermé qui est plan, les bords des deux parties venant en appui l'un sur l'autre lorsque ces deux parties sont assemblées l'une à l'autre.

Les deux parties 2 et 3 s'encliquètent l'une dans l'autre par l'intermédiaire d'agrafes réparties le long de ces bords, chaque agrafe comprenant un anneau porté par l'une des parties, et un ergot porté par l'autre partie.

Comme visible dans la figure 4, la partie 2 comporte un bord 43 le long duquel sont répartis successivement un premier anneau 44 et un premier ergot 46 situés au niveau du centre de la paroi supérieure 6, puis un second anneau 47 situé au niveau de la paroi latérale 4 à proximité du fond 7, et un second ergot 48 situé au niveau de la paroi latérale 4 à proximité du fond 7 et à l'opposée du second anneau 47.

Complémentairement, le contour 43 présente le long du fond 7, successivement une languette 49, puis un renfoncement 50, puis une autre languette 51 suivie d'un autre renfoncement 52.

Le premier ergot et le premier anneau sont situés à des emplacements symétriques l'un de l'autre par rapport à un plan N qui est normal au plan P du contour 43 et qui passe par l'axe AX, et de même pour le second ergot et le second anneau. Il en va de même des languettes et des renfoncements, chaque languette étant située à un emplacement qui est le symétrique par rapport au plan N d'un emplacement où est situé un renfoncement.

Les deux parties 2 et 3 sont ainsi identiques, tout en comportant des ergots et des anneaux placés à des positions symétriques par rapport à un plan médian N. Lorsqu'une partie est engagée dans l'autre pour assemblage, le premier ergot de la première partie s'engage dans le premier anneau de la seconde partie, et il en va de même des seconds ergots et anneaux, ainsi que des languettes et des renfoncements.

Cette structure à deux parties identiques est avantageuse en matière de coût de production, puisqu'elle permet de fabriquer un boîtier comportant une paroi latérale ainsi qu'un fond et une paroi supérieure, en produisant seulement deux exemplaires d'une même pièce unique. Cette pièce unique comporte une demi-paroi latérale ainsi qu'un demi-fond et une demi-paroi supérieure, et elle peut par ailleurs être obtenue par moulage par injection.

Comme visible dans les figures, chaque partie comporte également une première et une seconde languette complémentaires, repérées par 54 et 56 qui sont destinées à former complémentairement un organe d'accrochage.

La première et la seconde languette 54 et 56 ont chacune une forme repliée à angle droit, pour présenter en section la forme de la lettre L. Elles se positionnent complémentairement l'une par rapport à l'autre lorsque les deux parties 2 et 3 sont assemblées de manière à constituer un contour délimitant une ouverture interne, ou canal, de section rectangulaire apte à recevoir un ruban cranté.

A cet effet, l'extrémité libre de la première languette 54 comporte un plot 57 orienté parallèlement aux ergots 46 et 48, c'est-à-dire selon une direction normale à l'axe AX et parallèle au plan N. La seconde languette 56 comporte une ouverture complémentaire 58 apte à recevoir ce plot pour solidariser rigidement l'une à l'autre les extrémités de ces languettes lorsque les parties 2 et 3 sont emboîtées l'une dans l'autre.

Une première et une seconde languette ainsi assemblée forment alors un organe d'accrochage rigide présentant un canal interne sensiblement indéformable apte à recevoir un ruban cranté. Grâce à sa structure à deux languettes complémentaires portées par deux parties différentes, chaque canal est ainsi ouvert lorsque les parties 2 et 3 sont séparées l'une de l'autre et il est fermé lorsqu'elles sont assemblées l'une à l'autre.

Complémentairement, l'une des deux languettes 54, 56, voire les deux languettes comportent un ou plusieurs ergots ou crantages internes non visibles dans les figures, qui dépassent de la face interne du canal que délimitent ces deux languettes lorsqu'elles sont réunies. Ce ou ces crantages internes coopèrent avec le crantage externe réalisé à l'une des faces du ruban pour bloquer ce ruban en position, c'est-à-dire pour permettre son serrage.

Comme on l'aura compris, lorsque les rubans 16 et 17 sont fabriqués chacun en une seule pièce les corps de ces rubans peuvent être engagés dans les canaux des organes d'accrochage lorsqu'ils sont ouverts, c'est-à-dire lorsque les parties 2 et 3 sont séparées l'une de l'autre.

Autrement dit, chaque corps de ruban 16, 17 est d'abord maintenu sur une languette correspondante 54, 56, portée par la partie 2, avant de rapporter et de fixer la partie 3 à celle-ci, ce qui permet de constituer le boîtier tout en fermant les canaux dans lesquels les corps de rubans ont été préalablement engagés.

Lorsque les rubans 16 et 17 sont au contraire fabriqués en plusieurs portions distinctes, les parties 2 et 3 du boîtier peuvent être assemblées dans un premier temps, avant d'engager dans les canaux des organes d'accrochage 9 et 11, les extrémités des corps de rubans 16 et 17. Les boucles et/ou palettes associées à ces corps de rubans peuvent alors être solidarisées aux extrémités de ces corps de rubans pour que le boîtier puisse être prêt pour son implantation sur une dalle.

Il est à noter que dans l'exemple illustré sur les figures, chaque organe d'accrochage 9, 11 est constitué de deux parties complémentaires portées par deux parties distinctes, mais que chaque partie pourrait aussi bien porter la totalité d'un organe d'accrochage, qui ne pourrait alors pas être ouvert.

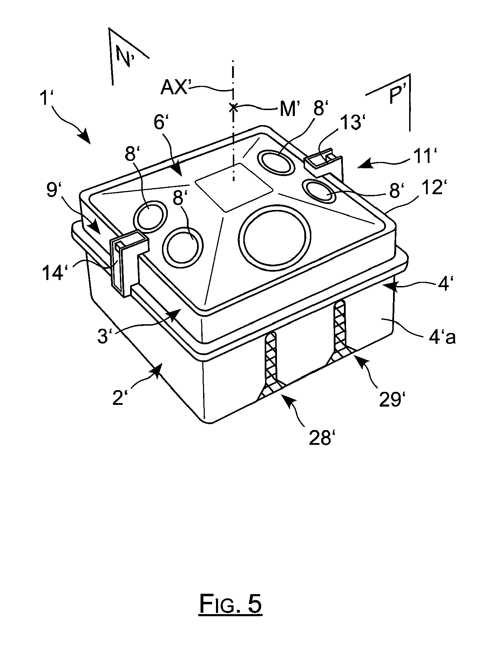

Par ailleurs, au lieu d'être constitué de deux parties identiques comme dans le cas des figures 1 à 4, le boîtier peut également être constitué d'un corps en forme de boîte et d'un couvercle fermant ce corps, ce qui correspond au mode de réalisation de la figure 5.

Le boîtier selon le second mode de réalisation de l'invention qui est repéré par 1' dans la figure 5 a la même forme générale que celui des figures 1 à 4, tout en étant formé par un corps repéré par 2' qui est fermé par un couvercle repéré par 3'.

Cet autre boîtier est lui aussi généralement symétrique par rapport à un axe central repéré par AX' et par rapport à deux plans P', N' perpendiculaires contenant cet axe AX'. La paroi latérale 4' qui fait partie du corps 2' comporte aussi deux encoches 28', 29' au niveau de l'une de ses faces repérée par 4'a, et deux autres encoches non visibles dans la figure réalisées à la face qui est opposée à la face 4'a.

Il comporte également deux organes d'accrochage 9' et 11' situés au niveau d'une arête 12' circonférentielle supérieure, ces deux organes d'accrochage qui sont symétriques l'un de l'autre par rapport au plan N', sont tous deux portés par le couvercle 3'. Chaque organe d'accrochage 9', 11', définit un canal 13', 14', présentant un ergot ou une protubérance interne non visible permettant d'y engager un ruban cranté et de le serrer, c'est-à-dire de le bloquer en position pour implanter le boîtier.

Le couvercle qui porte à sa face supérieure des ouvertures 8' destinées à recevoir des câbles électriques s'emboîte sur la partie supérieure du corps pour le fermer, la face inférieure ou fond de ce corps étant, tout comme dans le premier mode de réalisation grillagée et pourvue de deux lignes d'affaiblissement joignant les encoches.

## Revendications

1. Boîtier de descente de câbles électriques (1 ; 1'), destiné à être intégré à un élément de bâtiment en béton tel qu'une prédalle en étant implanté avant coulage du béton, ce boîtier comportant une paroi inférieure (7) et une paroi supérieure (6) destinées à être traversées par un câble électrique gainé après coulage du béton constituant l'élément auquel il est intégré, **caractérisé en ce qu'**il comporte des organes d'accrochage (9, 11 ; 9', 11') opposés, chaque organe d'accrochage (9, 11 ; 9', 11') constituant un oeillet ou passant agencé pour recevoir un ruban cranté (16, 17) et pour bloquer ce ruban cranté (16, 17).

2. Boîtier selon la revendication 1, comportant deux organes d'accrochage (9, 11 ; 9', 11') situés au niveau d'une arête supérieure (12 ; 12') de ce boîtier (1 ; 1') et dépassant latéralement par rapport à cette arête supérieure (12 ; 12').

3. Boîtier selon la revendication 1 ou 2, constitué d'un corps (2') et d'un couvercle (3') fermant ce corps, et dans lequel les organes d'accrochage (9', 11') sont portés par le couvercle (3').

4. Boîtier selon l'une des revendications précédentes, comportant une paroi latérale (4') pourvue d'au moins deux encoches (28, 29, 31, 32 ; 28', 29') s'étendant perpendiculairement au fond (7), ces deux encoches (28, 29, 31, 32 ; 28', 29') étant formées dans deux face opposées (4a, 4b) de cette paroi latérale (4 ; 4'), en étant prévues pour recevoir un câble de précontrainte (35) chevauché par le boîtier, le fond (7) comportant une ligne d'affaiblissement (33, 34) reliant ces deux encoches (28, 29, 31, 32 ; 28', 29') l'une à l'autre.

5. Boîtier selon l'une des revendications précédentes, comportant un fond (7) dont au moins une partie présente une structure de type grillagée ou croisillonnée.

6. Boîtier selon l'une des revendications précédentes, constitué de deux parties identiques (2, 3) portant chacune au moins un anneau (44, 47) et au moins un ergot (46, 48) complémentaires, ces deux parties s'emboîtant l'une dans l'autre par encliquetage d'au moins un ergot (46, 48) porté par l'une des parties dans au moins un anneau (44, 47) porté par l'autre partie et réciproquement.

7. Boîtier selon la revendication 6, comportant un fond (7) et une paroi supérieure (6), le fond étant constitué de deux demi-fonds faisant chacun partie de l'une des deux parties (2, 3) constitutives du boîtier (1), et la paroi supérieure (6) étant elle aussi constituée de deux demi-parois supérieures faisant chacune partie de l'une des parties (2, 3) constituant ce boîtier.
